# EUROPEAN PATENT SPECIFICATION

(11) **EP 2 712 500 B1**
(45) Date of publication and mention of the grant of the patent: **14.01.2015**
(21) Application number: 12186005.0
(22) Date of filing: 26.09.2012
(51) Int. Cl.: A01K 1/03, A01K 29/00

(54) **Mobile platform arrangement**
Mobile Plattformanordnung
Agencement de plateforme mobile

(43) Date of publication of application: 02.04.2014
(73) Proprietor: Neurotar Oy, 00790 Helsinki (FI)
(72) Inventor: Osmekhin, Sergey, 01200 Vantaa (FI); Khirug, Leonard, 00790 Helsinki (FI)
(74) Representative: IPR Partners Ltd

(56) References cited:
- EP-A2- 0 363 755
- EP-A2- 0 872 179
- US-A1- 2007 006 820
- US-B1- 6 279 511
- US-B1- 6 602 220
- MATSAMURA: "a novel apparatus that permits multiple routes for infusions and boy-fluid collections in a freely moving animal", JOURNAL OF NEUROSCIENCE METHODS, ELSEVIER SCIENCE PUBLISHER B.V., AMSTERDAM, NL, vol. 57, 1 January 1995 (1995-01-01), pages 145-149, XP002109530, ISSN: 0165-0270, DOI: 10.1016/0165-0270(94)00107-R

## Description

### FIELD OF THE INVENTION

Present invention relates to apparatuses and methods, intended to provide aid in monitoring brain processes in awake and conscious small laboratory animals, such as rodents.

### BACKGROUND

Mammalian brain is a complex, intricately organized organ responsible for information processing, cognition and behavioural responses to environmental challenges. Currently two major classes of methodological approaches, such as electrophysiology and imaging/microscopy are used to study brain function and pathology in mammals. Electrophysiological methods range from activity registration of cell ensembles either by electroencephalography (EEG) or by means of implanted electrodes and multielectrode arrays to single cell recordings by means of patch clamp technique, for example. Imaging and microscopy methods employ in turn a variety of electromagnetic radiation spectral segments, such as visible or infrared light, X-rays, microwaves, magnetic resonance and the like. For those skilled in art it is clear, that the most common object for conducting laboratory scale experiments on mammals is a small rodent, such as a mouse or a rat. Correspondingly a variety of experimental setup is developed mostly for small rodents. The terms 'animal', 'experimental animal', 'small experimental animal', 'laboratory animal' and the like refer in this disclosure to a small rodent, such as a mouse or a rat.

While low-resolution microscopic imaging and implanted electrode-based electrophysiology experiments are relatively easy to perform on awake and freely moving animal, both single cell recordings and high-resolution imaging experiments on awake and moving animal represent a significant challenge. In accordance with current practice the latter methods are performed either on anesthetized animals (*Hofer et al., 2009; Holtmaat et al., 2009*) or require utilization of highly specialized devices, such as implanted fiber optics or miniaturized microscope scanning heads (*Flusberg et al., 2005; Flusberg et al., 2008*). Several technical approaches are known to be available at present for *in vivo* two-photon microscopy (TPM) in brain tissue of small experimental animal. All these approaches are based on craniotomy (*Holtmaat et al., 2009*) and similar methods of head fixation under the microscope objective (*Holtmaat et al., 2009; Yang et al., 2010*). A majority of these approaches are performed on anesthetized animal, which consequently implies a presence of negative side effects from anaesthetics (*Larsen and Langmoen, 1998*). These side effects are mostly due to the prolonged exposure to anaesthetics or repeated administration of anaesthetics.

It is however clear for those skilled in art that the functionality of unconscious brain may not be considered a suitable object for modelling working brain activity (*Nallasamy and Tsao, 2011*). Whether anaesthetic agents are to induce changes in precise architecture of neuronal membrane lipid bilayer and act as allosteric inhibitors or activators for different receptors and channel proteins on cellular surface (*Chau, 2010*), cell physiology, in particular physiology of neurons, in regard to an animal exposed to any anaesthetics may not be considered comparable to that in regard to an animal provided with no anaesthetics.

However, one should face that performed on anesthetized animal repetitive imaging sessions, long imaging sessions or combinations thereof (*Hofer et al., 2009; Holtmaat et al., 2009*) are still considered as approaches providing at a time present best microscopic results *in vivo,* although these techniques bear all limitations disclosed above.

In addition to abovementioned physiological limitations caused by anaesthesia, several methodological techniques are known from prior art that are simply not applicable for unconscious animal for technical reasons. That refers, in particular, to classical behavioural paradigms, for example those, utilizing behavioural tasks for animals in a labyrinth. Studies of the kind utilize various cage-like devices adapted to induce specific behavioural responses in an experimental animal. Patent US 3,974,798 discloses a method and an apparatus in the form of cage for studying a behavioural response of an experimental animal to various natural and artificial stimuli, such as vibration of cage floor or conducting a current therethrough. US 7,086,350 discloses an animal cage behaviour system for monitoring complex behaviours in small laboratory animals, such as rats, mice, rabbits, guinea pigs etc., by means of applying thereto widely known tests, such as certain feeding patterns or fluctuating dark-and-light cycles.

Conducting neurophysiological studies on awake and freely moving experimental animal, while obtaining a behavioural response, still represents a problem for scientific community. In other words, a problem still exists of combining advanced modem techniques as two-photon microscopy in brain tissue in combination with classic behavioural tests. Those skilled in art may credibly estimate the scale of abovementioned problem and understand grand importance thereof in modem brain research.

Certain systems exist, providing a partial solution to the abovementioned problem. One of the systems exploits an idea dated back to 1930-s and disclosed in US 1,794,951 and provides a simple device representing a tread wheel on which experimental animal can move only straight forward or backward while its head is fixed under multiphoton microscope during imaging session (*Wienisch, 2011*)*.* Another much more elegant and advanced system setup utilizes an idea of suspended in the air spherical treadmill (*Hölscher et al., 2005*), on which animal can walk in different directions while its head is fixed under two-photon microscope during imaging (*Dombeck et al., 2007*). Combination of spherical treadmill setup with virtual reality system enables tracking the path of an experimental animal and therefore approaches simple behavioural paradigms, such as T-maze (*Kendler 1947*).

Publication EP 0, 872, 179 discloses an apparatus, responsive to the rotational movement of a freely-moving animal. The apparatus comprises a container, attached to a motor-driven turntable. Both turntable and container (cage) are caused to rotate in a direction opposite of the detected direction of rotation of animal, freely moving within the container. The apparatus comprises a sensor assembly for detection of the direction of rotation of an animal within the container and to trigger a counter rotation of the turntable (and the container). The apparatus enables tracking of the rotational behaviour of the animal, whereas motion patterns other than rotational are not taken into account.

Above mentioned systems are constrained with several common problems. The first problem is the translation of results, obtained from animal experiments on a curved surface, onto classical behavioural paradigms that are largely based on a prerequisite of a flat surface imitating to some extent natural environmental conditions. The second problem originates from an unnaturally unlimited surface provided by both abovementioned systems (*Wienisch, 2011, Hölscher et al., 2005*). The problem therefore lies in a lack of sensory stimulating obstacles normally featured in classical behavioural paradigms as well as in natural environmental conditions. Moreover, one of the necessary requirements for realization of existing approaches is a complete reconstruction of a microscopic setup, since the height of mandatory equipment does not otherwise allow fitting abovementioned systems under the microscope. Such reconstruction may cause problems with optical path alignment and furthermore microscopic equipment is not necessarily longer serviced by microscope supplier. Considering the prices on advanced microscopic equipment, loss of supplier warranty may be an important factor preventing complete reinstallation of said equipment.

It is therefore desirable to provide a system and method for bridging a gap between neuronal activity- and behavioral research with relatively simple and accessible realization means.

### SUMMARY OF THE INVENTION

The objective of the present invention is to alleviate above mentioned problems by providing a device and method, implemented to link together classical methods of behavioural research, electrophysiological approaches and cutting edge high resolution imaging techniques, in particular two-photon microscopy combined with virtual reality. In particular, present invention allows exploring behavioural aspects of experimental animals in conditions, utmost close to natural and/or familiar environment thereof. Thus, behavioural concepts may be studied upon stimulation by natural obstacles, such as walls, barriers of different shapes and the like, as well as the influence of physiological cues may be explored, such cues as food, drinking water, aversive stimuli and the like. In addition, the invention provides a convenient technical setup requiring minimal rearrangement of already available microscopic equipment, thus implementing an experimental tool equally suitable for both large research centre core facilities and small-scale commercial laboratories.

The objective is achieved by implementing a mobile platform arrangement to be integrated into a standard laboratory setup for neuronal research, such as a multi-photon microscope, for example, and method of operation thereof, said mobile platform arrangement comprises a first platform, provided as a shallow flat-bottomed container with an outer diameter d, positioned within a second platform, provided as a flat-bottomed member with a diameter at least 2d, wherein the top surface of the second platform is advantageously provided with a friction reducing surface structure; wherein the friction reducing surface structure of the second platform is adapted to significantly reduce friction between the first and the second platforms; wherein the first platform is arranged to perform unobstructed gliding motion along and/or over the friction reducing surface structure of the second platform and wherein the gliding motion of the first platform along and/or over the friction reducing surface structure of the second platform is enabled by reduced friction between platforms.

In preferred embodiment the first platform is implemented as a shallow flat-bottomed cylindrical dish or container with an outer diameter d. For clarity purposes the first platform is further referred in this disclosure as a "mobile platform". The mobile platform is preferably implemented of such a size to freely accommodate a small experimental animal. The second platform is implemented in the form of a flat-bottomed member, provided with boundaries, whose diameter within boundaries is at least two outer diameters (2d) of the mobile platform. For clarity purposes the second platform is further referred in this disclosure as a "support platform". The mobile platform is positioned onto and/or within the surface of the support platform delimited by boundaries, such as a top surface of the support platform, for example. The provision of the support platform makes it possible to reduce friction between bottom of the mobile platform and the top surface area of the support platform and to support a gliding motion of the mobile platform along and/or over the top surface of the support platform. Friction reduction is achieved by providing said boundary-delimited top surface area of the support platform with a surface structure adapted to substantially reduce friction between platforms, defined further in this disclosure as a "sliding surface". Motion of the mobile platform along and/or over the sliding surface of the support platform is mediated by small experimental animal unrestrictedly moving within the mobile platform.

In one embodiment the support platform is implemented in the form of a flat-bottomed container with its top surface surrounded by sidewalls. Top surface of the support platform, thus enclosed within the sidewalls, may be referred as a floor surface, in accordance with this embodiment.

In one embodiment the support platform is implemented in the form of a flat-bottomed platform in the form of a plate, such as a disc, for example, with a flat top surface delimited by edge-like boundaries.

In one embodiment the support platform is provided with an even sliding surface structure in the form of an additional element arranged at a certain height from the top surface of the support platform. The sliding surface substantially duplicates the top surface of the support platform by size and shape and is strictly parallel thereto. In fact, the support platform is thus provided with a double surface with an interspace formed between an "upper" surface, herein provided by the sliding surface, and a "lower" surface, herein provided as a floor surface area of the support platform. Sliding surface comprises multiple apertures arranged at a predefined distance from each other. A constant uniform air flow is supplied through the apertures to enable the mobile platform to perform smooth unobstructed motion, referred herein as gliding, over the sliding surface on thus created air cushion. Air flow is supplied via an air compressor or any other technically suitable air flow supply device. Any other nonhazardous gas technically suitable for the purposes of the invention may be utilized.

In some embodiments an external surface of the mobile platform is provided with a circumferential projection arranged along a perimeter thereof in the form of plastic skirt. In some embodiments an external surface of the mobile platform comprises recesses that may be arranged concentrically and/or into patterns. Recesses may be provided in the form of grooves, clefts, cavities and the like. Recesses are configured to facilitate uniform air supply to an external bottom of the mobile platform as to enable gliding motion thereof in accordance with previous embodiment.

In one embodiment the support platform is provided with a sliding surface structure in the form of a surface component manufactured from a material with reduced friction coefficient and additionally covered with a lubricant.

In one embodiment both the support platform and the mobile platform incorporate arrays of magnets, wherein each magnet is in the form of a bar, a cylinder or the like having two poles, north and south, and of a suitable size to be integrated into each platform. Magnetic arrays are preferably arranged so that the north poles of both mobile- and support platforms magnets face each other. Friction reduction between support- and mobile platforms is thus caused by magnetic repulsion, and, respectively, gliding motion of the mobile platform along and/or over the support platform is realized by means of magnetic levitation.

In one mostly additional embodiment, the mobile platform and/or the support platform may comprise electromagnets incorporated therein.

In one embodiment the support platform is provided with a sliding surface structure formed by bearing array(s).

In one embodiment the support platform is provided in the form of a liquid-filled container, wherein liquid-air interface forms a sliding surface for the mobile platform. Mobile platform is in turn provided with a support cushion enabling mobile platform to float on a liquid surface.

It is another subject of the invention to provide a mobile platform arrangement comprising means for securing an awake and conscious small experimental animal.

In some embodiments means for securing an experimental animal comprise a head adapter and a support stand for the head adapter, which stand is fixedly or releasably mounted on the support platform or alternatively fixed at close proximity thereto. Head adapter provides rigid fixation of animal's head and ensures static position of animal's head in regards to the support platform. An animal is otherwise free to move within the borders defined by the side walls or of the mobile platform while its head remains rigidly fixed by the head adapter. The support stand is configured as mounting means the head adapter while not affecting motional freedom of the experimental animal within the mobile platform. An experimental animal moves within the mobile platform thus mediating mobile platform to perform gliding motion on and/over the sliding surface of the support platform.

In some embodiments the mobile platform of a substantially rectangular shape is provided.

In one aspect of the invention, a method to operate a mobile platform arrangement comprising means for securing an experimental animal is provided.

In another aspect of the invention, a method for obtaining experimental data on neuronal activity of awake, conscious and freely moving on the mobile platform arrangement animal is provided.

Different embodiments of the present invention will become apparent by consideration of the detailed description and accompanying drawings.

### BRIEF DESCRIPTION OF THE DRAWINGS

Fig. 1A illustrates a generalized concept of a mobile platform arrangement in accordance to some embodiment, wherein a support platform is provided in the form of a container with sidewalls.
Fig. 1B illustrates a generalized concept of a mobile platform arrangement in accordance to another embodiment, wherein a support platform is provided in the form of a disc-like platform.
Fig. 2A illustrates an exemplary mobile platform arrangement provided with air supply equipment.
Fig. 2B is a side view of an exemplary mobile platform arrangement of Fig.1.
Figs.3A-D illustrate various dimensional configurations and surface profiles for an external surface of the mobile platform.
Fig.4A illustrates an exemplary mobile platform arrangement, wherein the support platform is provided with a sliding surface covered with lubricant; side view, vertical cross-cut.
Fig. 4B illustrates an exemplary mobile platform arrangement, wherein both support platform and mobile platform incorporate arrays of magnets; side view, vertical cross-cut.
Fig. 4C illustrates an exemplary mobile platform arrangement, wherein the support platform is provided with a sliding surface formed by a bearing array; side view, vertical cross-cut.
Fig. 4D illustrates an exemplary mobile platform arrangement, wherein the support platform is provided in the form of a liquid-filled container and the mobile platform is stabilized on a liquid surface by means of ring-shaped support cushion; side view, vertical cross-cut.
Fig. 5 illustrates an exemplary mobile platform arrangement comprising means for securing an experimental animal.
Fig.6 illustrates an experimental animal and the head adapter for being fixed on animal's head.
Figs.7A and 7B illustrate the mobile platform of circular and rectangular shapes, respectively, and possible motion patterns thereof along and/or over the support platform, wherein motion of the mobile platform is mediated by movements of an experimental animal (not shown) positioned therein.

### DETAILED DESCRIPTION OF THE EMBODIMENTS

Detailed embodiments of the present invention are disclosed herein with the reference to accompanying drawings. The same reference characters are used throughout the drawings to refer to same members. Following citations are used for the members:
10 - mobile platform arrangement;
11 - a support platform;
11a - a sidewall of the support platform extending above the sliding surface;
12 - a sliding surface of the support platform;
13 - an air duct;
14 - height of the sidewall of the support platform;
14a - height on which the sliding surface is arranged, in accordance with one embodiment;
15 - apertures for air supply;
16 - air flow chamber, defined as an interspace formed between a sliding surface 12 and a floor surface area of the support platform, in accordance with one embodiment;
17 - magnetic array of the support platform;
17a - magnetic array of the mobile platform;
18 - bearing elements;
19 - a support cushion;
21 - a mobile platform;
22 - a cross section defining an external bottom of the mobile platform;
23 - recesses arranged at the bottom of the mobile platform;
24 - projection arranged at the bottom of the mobile platform along a perimeter thereof;
31 - an adapter for animal's head;
32 - holes for connectors, provided to connect head adapter to mounting means;
33 - central aperture in the head adapter;
42 - mounting means for head adapter realized as a support stand with pivot arm;
51 - a small rodent animal.

A mobile platform arrangement **10** is provided (Figs.lA-B), comprising a mobile platform **21** and a support platform **11.** In accordance with the preferred embodiment the mobile platform **21** is implemented as a shallow solid flat-bottomed cylindrical container or dish with an outer diameter d. The term "outer diameter" refers in this disclosure to a maximum diameter of an object, herein, the mobile platform **21.** The mobile platform **21** in accordance to this embodiment comprises an interior surface area surrounded by sidewalls.

Term "external surface" or "bottom" in regard to the mobile platform **21** may further refer in this disclosure to that part of the mobile platform directly facing the support platform; and the term "floor" may further refer to an interior surface area of the mobile platform surrounded by sidewalls.

The size of the mobile platform **21** is preferably sufficient to accommodate a small experimental animal, such as a mouse, for example, so, that an animal has a certain freedom of movement within the borders of the mobile platform, naturally defined by walls of the container. Diameter d may be about 15 cm, whether an experimental animal is a mouse, however, the size of the mobile platform naturally depends on the size and weight of an animal, diameter d thus ranging 15-20 cm depending on experimental setup. An experimental animal is thus free to walk within the mobile platform **21.** The weight of the mobile platform **21** is preferably adjusted to approximately match the weight of an experimental animal it accommodates.

The mobile platform **21** is positioned within or onto the support platform **11.**

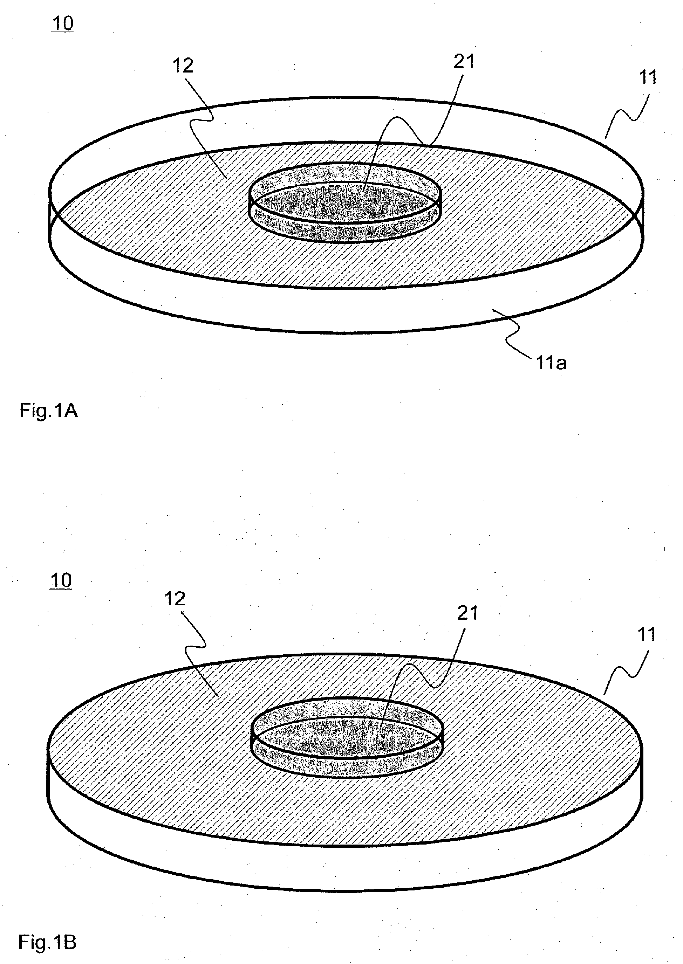

In accordance with the preferred embodiment, the support platform **11** is implemented as a solid flat-bottomed cylindrical container whose inner diameter equals at least two outer diameters **(2d)** of the mobile platform thus ranging 30-40 cm (Fig.1A). The support platform **11** of this embodiment is provided by sidewalls **11a** that define boundaries of the support platform. The term "inner diameter" refers in this disclosure to a diameter defined by inner boundaries of an object, herein the support platform **11,** in particular to the diameter of a floor surface within sidewalls **11a** of the support platform **11.** The term "floor" in regard to the support platform **11** may further refer to an interior surface area of the support platform surrounded by sidewalls **11a.** Height of sidewalls may range 3-10 cm.

In another embodiment the support platform **11** may be realized as a flat-bottomed plate-like platform (Fig. 1B). Fig. 1B shows an exemplary support platform **11** having a disk-like shape; however, other implementations are not excluded. The support platform of this embodiment has a top surface and side edges. Boundaries of the support platform of Fig. 1B are naturally defined by the side edges of the platform. Herein, the mobile platform **21** if positioned onto the top surface of the support platform, which top surface performs same function as floor surface (within sidewalls) of Fig. 1A.

In accordance with any aforesaid embodiment the support platform **11** is provided with a sliding surface structure **12,** further referred as a "sliding surface". Sliding surface **12** is configured as a structural element providing and/or supporting unobstructed gliding motion of the mobile platform **21** on/over the surface area defined by the boundaries of the support platform **11.** The sliding surface **12** of Fig.1A is thus defined by a floor surface within sidewalls **11a** of the support platform **11;** and the sliding surface **12** of Fig.1B is defined by a top surface of the support platform **11.**

Various implementations of the sliding surface structure **12** are disclosed below.

The mobile platform **21** is preferably manufactured from various plastic-based materials, including various types of reinforced plastics; however, any other technically appropriate material for manufacturing thereof is not excluded.

The support platform **11** is preferably metallic; however, any other technically appropriate materials, such as plastics and/or reinforced plastics, for manufacturing thereof are not excluded.

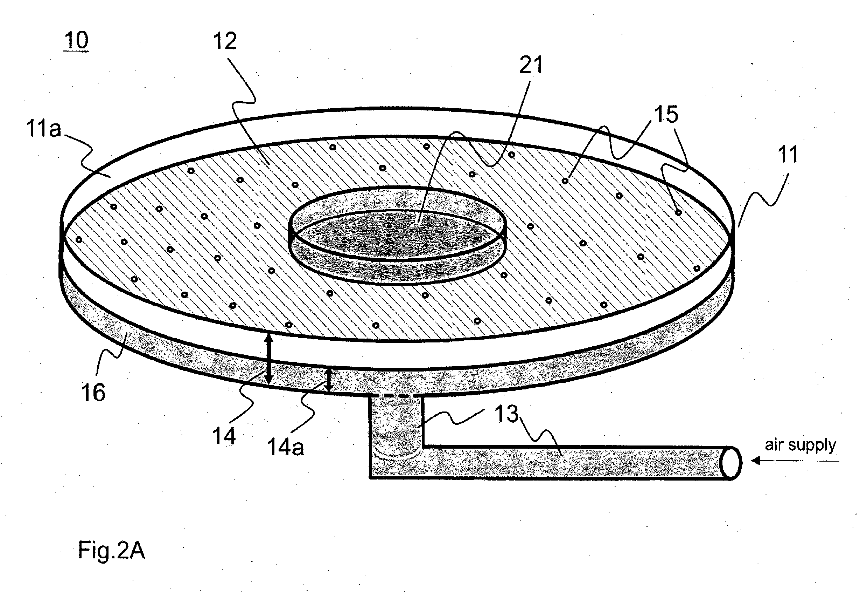

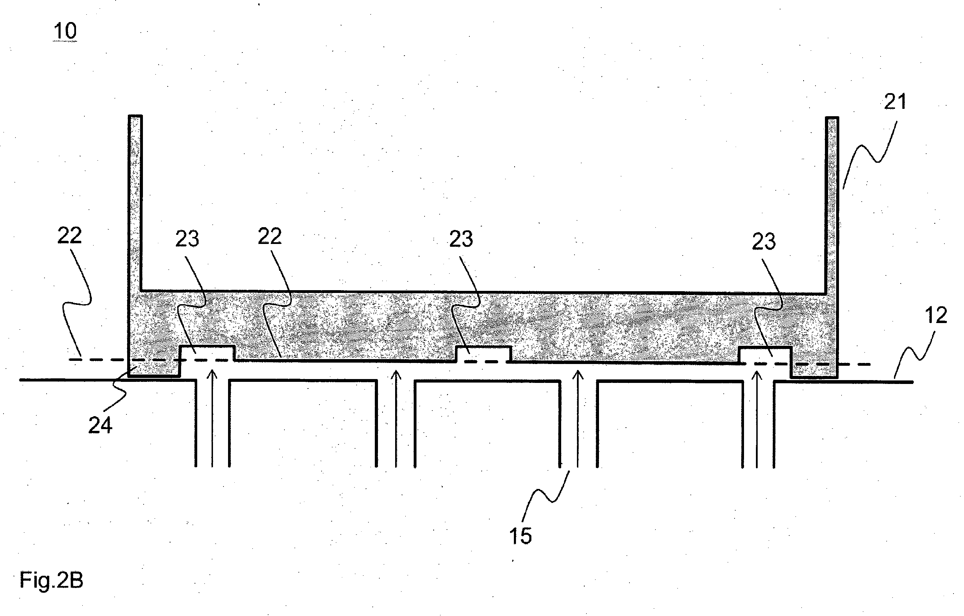

Figs. 2A and 2B illustrate the mobile platform arrangement **10** in accordance with the preferred embodiment. Fig. 2A illustrates a dimensional arrangement of the sliding surface **12** in regards to the support platform **11.** Referring to Fig. 2A, the mobile platform arrangement **10** comprises the mobile platform **21** and the container-like support platform **11** with sidewalls **11a.** The height of a support platform **11,** defined herein as a distance between the floor of the support platform and an upper sidewall edge, is designated as **14.** The support platform **11** is provided with an even sliding surface **12,** configured herein as an additional structural element arranged at certain height **14a** from the floor of the support platform. Sliding surface **12** cross-sectionally substantially duplicates floor area of the support platform **11** by shape and size and is strictly parallel thereto. In accordance with this embodiment the support platform **11** is in fact provided with a double surface, wherein a substantially closed interspace is formed between the sliding surface **12** and the floor area within the support platform. This interspace is further referred to as **16.** Installation of the sliding surface **12,** as defined in this embodiment, into the support platform may be performed by gluing, soldering or other means of insertion or mounting within the container defining the support platform **11.** Sliding surface **12** is configured to comprise multiple apertures **15** arranged at a predefined distance from each other. Apertures **15** are about 1-2 mm in diameter and are preferably situated at a distance of about 10-30 mm from each other. Distance between all apertures may be equal or may vary between individual apertures. Constant uniform air flow is supplied through apertures **15** to substantially reduce friction between platforms and enable the mobile platform **21** to glide over the sliding surface **12** on thus created air cushion. Two-dimensional arrangement of apertures **15** is preferably such to provide an optimal distribution of air streams over the sliding surface **12.** An interspace **16** may thus be defined as an air flow chamber. Chamber **16** enables internal air circulation necessary to provide uniform air distribution into apertures **15.** Air to chamber **16** is supplied under pressure through a connector inlet (not shown) via duct **13** and by means of an air compressor (not shown) or any other technically suitable device. Central location of duct **13** in regard to the bottom of the support platform **11,** as well as angled bend thereof, is exemplary and not to be interpreted as technical features limiting the invention. For those skilled in art it is clear, that duct **13** may be arranged elsewhere within the bottom or sidewalls of the support platform, and that duct **13** may be bent, curved, inclined or remain straight, whether technically appropriate. Other nonhazardous gas may be utilized instead of air.

The sliding surface **12** in accordance to this embodiment is manufactured from plastic materials; however, other appropriate materials for manufacturing thereof are not excluded.

Fig. 2B illustrates the mobile platform arrangement **10** from sideways and shows position of the mobile platform **21** in regard to the sliding surface **12** of the support platform in more detail. Fig. 2B is therefore a vertical cross-cut of the mobile platform **21** placed onto the sliding surface **12** of the support platform **11.** In accordance to some embodiment, an external surface of the mobile platform **21** is provided with a circumferential projection **24** arranged downwards along a perimeter of the external surface, a so called skirt. For clarity purposes said external surface of the mobile platform **21** is designated as **22.** The external surface **22** thus faces the sliding surface **12** of the support platform **11.** Profile of the projection **24** substantially duplicates sidewall profile of the mobile platform **21.** Height of the projection **24** from an external surface **22** downwards ranges 3-15 mm. Projection **24** is preferably manufactured from plastic. Mobile platform **21** may be manufactured as a whole with the projection **24** or otherwise element **24** may be manufactured as an additional circumferential component and further fixed onto the external surface of the mobile platform **21** during manufacturing process.

In accordance with one embodiment, an external surface **22** of the mobile platform also may comprise recesses **23.** For clarity purposes the external surface **22** is additionally indicated by a dashed line (Fig.2B), which performs functions of a baseline and indicates a base level for the bottom of the mobile platform apart from projection **24** and/or recesses **23.**

Recesses **23** may be arranged concentrically and/or into patterns. Recesses may be provided in the form of grooves, clefts, cavities and the like.

Both projection **24** and recesses **23** are configured to facilitate uniform air distribution over an external surface **22** of mobile platform **21,** so that air streams, supplied through apertures **15** of the sliding surface **12** of the support platform **11,** distribute uniformly over the bottom of the mobile platform **21.** A substantial friction reduction between platforms is thus achieved, namely between the sliding surface **12** of the support platform **11** and the bottom of the mobile platform **21.** Gliding movement of the mobile platform **21** over the sliding surface **12** of the support platform is therefore facilitated. Two-dimensional arrangement of elements **23** and **24** provides optimum stability for a mobile platform during its movement over the sliding surface **12** of the support platform.

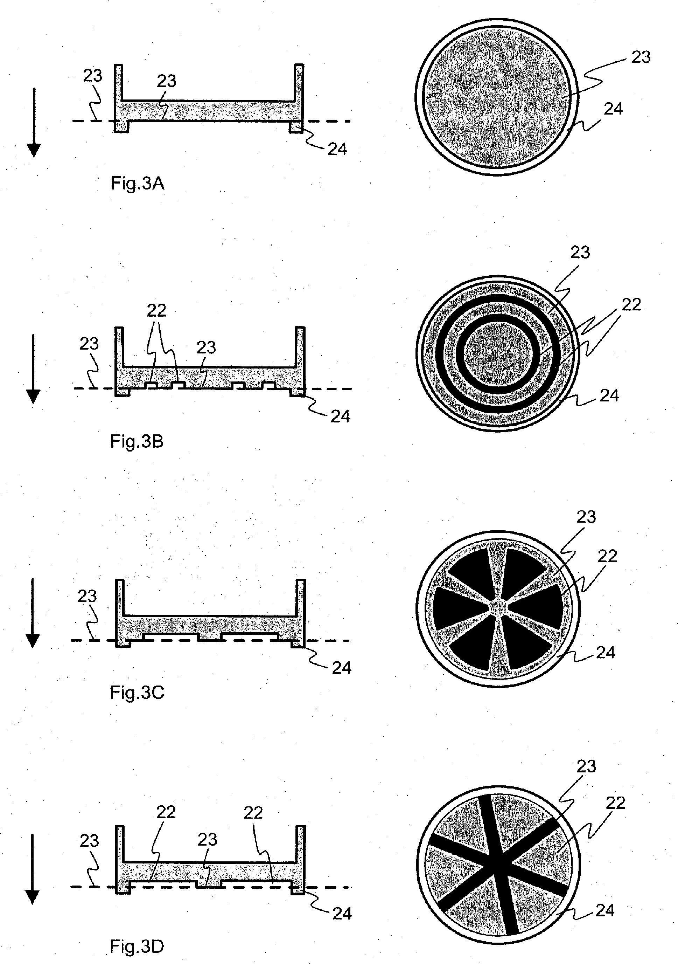

Possible provisions of the mobile platform **21** are illustrated by Fig.3A-3D as vertical cross-cuts (left) and views from below (right). Various profiles for the external surface **22** of the mobile platform **21** are thus shown. An external surface **22** is additionally indicated by a dashed line (left) in accordance with description above. Two-dimensional surface profiles on the right show an external surface of the mobile platform **22** (grey) as base level, a projection **24** (white) as a part above the base level, and recesses **23** (dark grey) as parts below the base level. Arrows on the left indicate reference direction pointing upwards the base level with reference to surface profiles on the right.

A gliding motion of the mobile platform **21** over the support platform **11** in accordance with this embodiment is thus realized in terms of aerodynamic levitation. While air is supplied through apertures **15** in the sliding surface **12** of the support platform **11,** friction between the mobile platform **21** and the sliding surface **12** is reduced and gliding motion of the mobile platform **21** over the sliding surface **12** is facilitated. An awake and conscious small experimental animal, such as a mouse, for example, is placed into the mobile platform **21.** An experimental animal, naturally, moves inside the mobile platform **21,** thus applying dynamic external force onto the mobile platform. The dynamic force provides necessary acceleration for the mobile platform the glide along the sliding surface. An animal thus mediates gliding motion of the mobile platform **21** within the support platform **11** by free trajectory by imposing an external acceleration force to the mobile platform **21.**

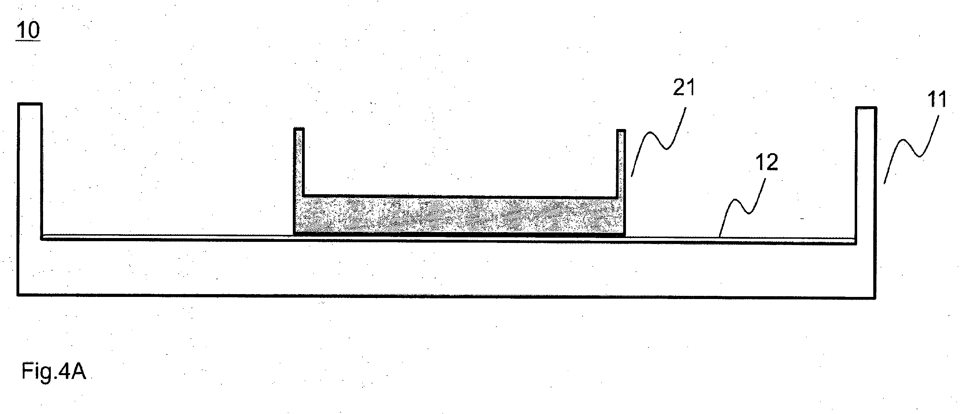

Figure 4A provides a vertical cross-cut for the mobile platform arrangement **10** in accordance to another embodiment. The support platform **11** is thus provided with the sliding surface structure **12,** realized as an additional component manufactured from a material with reduced friction coefficient and additionally or alternatively covered with a layer of lubricant. The sliding surface may be represented directly by the boundary-limited surface area of the support platform, in accordance with certain embodiments. In other words, the sliding surface **12** may be provided as a whole with the support platform **11** or alternatively it may be provided as an additional plate-like element manufactured from the material with reduced friction coefficient, which plate-like element will be further fixed onto a support platform during manufacturing process. The sliding surface **12** may thus be realized as a polished surface, for example. The sliding surface **12** is additionally or alternatively covered with a layer of lubricant, such as oil, for example. A lubricant is uniformly spread over the sliding surface **12** forming a sleek coating, which enables mobile platform **21** to perform smooth gliding motion on the sliding surface **12** of the support platform **11.** In order to further facilitate gliding motion, also an external surface of the mobile platform **21** may be realized in this embodiment as an even surface with friction-reduced characteristics, such as a polished surface, for example.

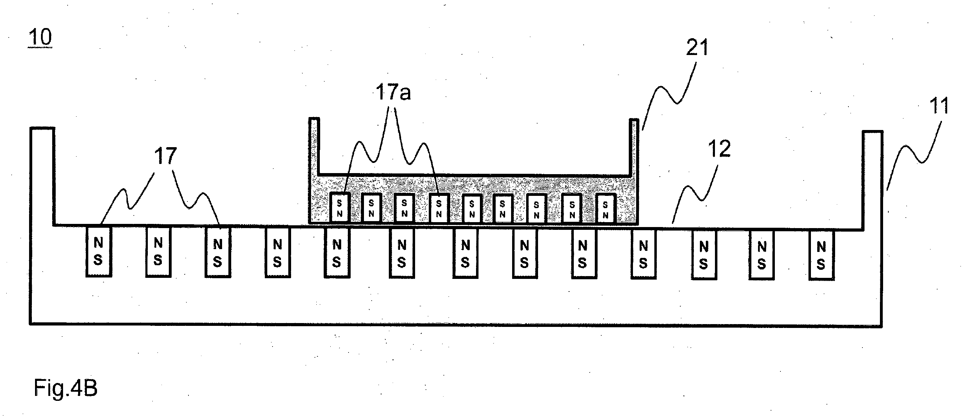

Fig. 4B provides a vertical cross-cut for the mobile platform arrangement **10** in accordance to some other embodiment. The gliding motion of the mobile platform **21** along the sliding surface **12** of the support platform **11** is realized herein in terms of magnetic repulsion. Both support and mobile platforms incorporate arrays of magnets, wherein each magnet in an array is provided in the form of a bar, a cylinder or the like having two poles, north and south, and of a suitable size to be integrated into an appropriate part of a corresponding platform. Magnetic arrays are arranged so that the north poles of both mobile- and support platforms magnets face each other.

The support platform **11** is thus provided with an array of individual magnets **17** incorporated, depending on an implementation, within a floor or within a top surface thereof so, that north poles of array magnets point upwards, i.e. towards an external surface of the mobile platform **21.** Individual magnets **17** of the support platform array are preferably, but not exclusively, arranged chequerwise.

The mobile platform **21** is in turn also provided with an array of individual magnets **17a** incorporated within a bottom thereof. Individual magnets of the mobile platform array are arranged with their north poles pointing downwards, i.e. towards the floor surface (or top surface) of the support platform **11** and, respectively, towards north poles of the support platform array magnets **17.** Magnets **17a** of the mobile platform array are preferably, but not exclusively, arranged concentrically.

The sliding surface **12** herein is formed as an interface created between the mobile- and the support platforms as a result of magnetic repulsion between arrays of individual magnets **17** and **17a.** Phenomenon of magnetic repulsion thus causes substantial friction reduction between platforms and facilitates gliding motion of the mobile platform **21** whether manual or experimental animal- mediated acceleration is applied.

Positioning of individual magnets within an array as well as general dislocation of magnetic arrays within either platform may be varied depending on experimental setup and overall technical implementation.

In accordance with another embodiment, the mobile platform arrangement may be realized in terms of electromagnetic suspension, wherein the mobile platform preferably comprises array(s) of electromagnets and the support platform is provided with a magnetically conducting surface.

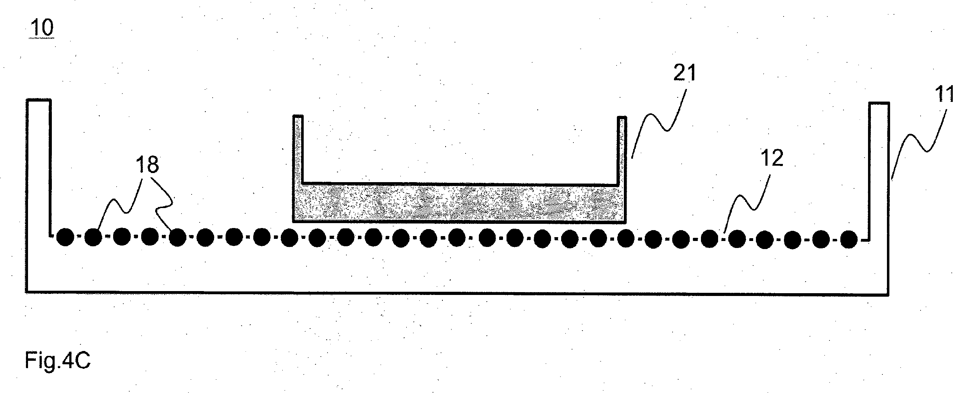

Fig. 4C provides a vertical cross-cut for the mobile platform arrangement **10** in accordance to some other embodiment, wherein the support platform **11** is provided with a sliding surface structure **12** formed by bearing array(s). Bearing array(s) comprise bearing elements **18,** such as ball bearings, for example, arranged concentrically, linearly, diagonally, chequerwise or in any other technically appropriate way. The mobile platform **21** in accordance to this embodiment is preferably provided with an even external surface with friction-reduced characteristics, such as a polished surface, for example.

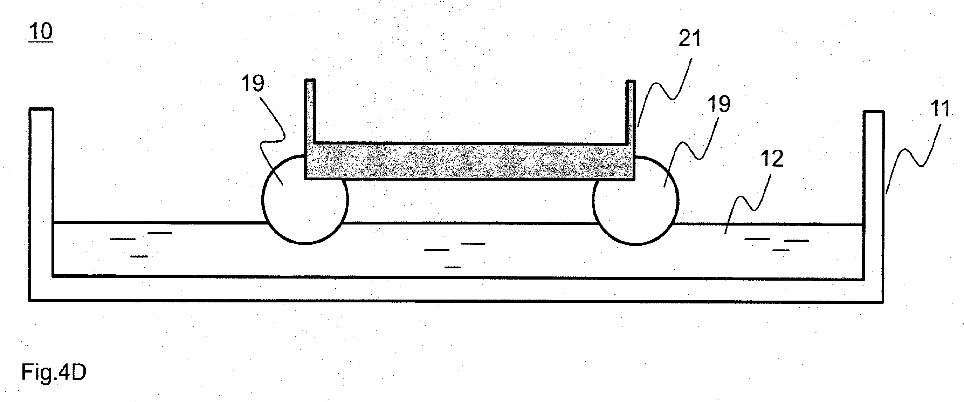

Fig. 4D provides a vertical cross-cut for the mobile platform arrangement **10** in accordance to some other embodiment. The support platform **11** is advantageously implemented as a container or a tank. Support platform **11** preferably contains liquid. The liquid may be provided as a glycerol-water mix, for example, however other technically appropriate options are possible. Sliding surface **12** is formed by a liquid-air interface in the tank. Mobile platform **21** in accordance with this embodiment is, in turn, provided with a buoyant element manufactured advantageously in the form of a support cushion **19.** The support cushion **19** may be manufactured as a separate element and fixed onto the mobile platform further on. Support cushion **19** provides buoyancy to the mobile platform **21** enabling it to float on a liquid surface. The support cushion **19** is adapted to hold the weight of the mobile platform **21** with moving experimental animal within. The shape of the support cushion **19** is respectively adapted to stabilize the mobile platform **21** with moving experimental animal within and to provide optimum balance for the mobile platform while floating on a liquid. The support cushion **19** may be realized as doughnut-shaped Styrofoam balloon, an air filled tire and the like. Fig. 4D thus shows a doughnut-shaped support cushion **19** vertically crosscut. The support cushion may comprise one or more sections. Other technical implementations of the support cushion are not excluded, as long as it meets the requirement of providing sufficient buoyancy to the mobile platform with moving experimental animal within to keep the mobile platform afloat on a liquid surface.

A mobile platform arrangement **10,** comprising means for securing conscious and wake small experimental animal, is provided. Said means comprise a head adapter and mounting equipment for head adapter. Head adapter is rigidly fixed on experimental animal's head. The provision of mounting equipment for head adapter is such to provide an experimental animal with a head adapter fixed on its head freedom of movement within certain borders. The borders are thus technically set by a mobile platform arrangement **10.**

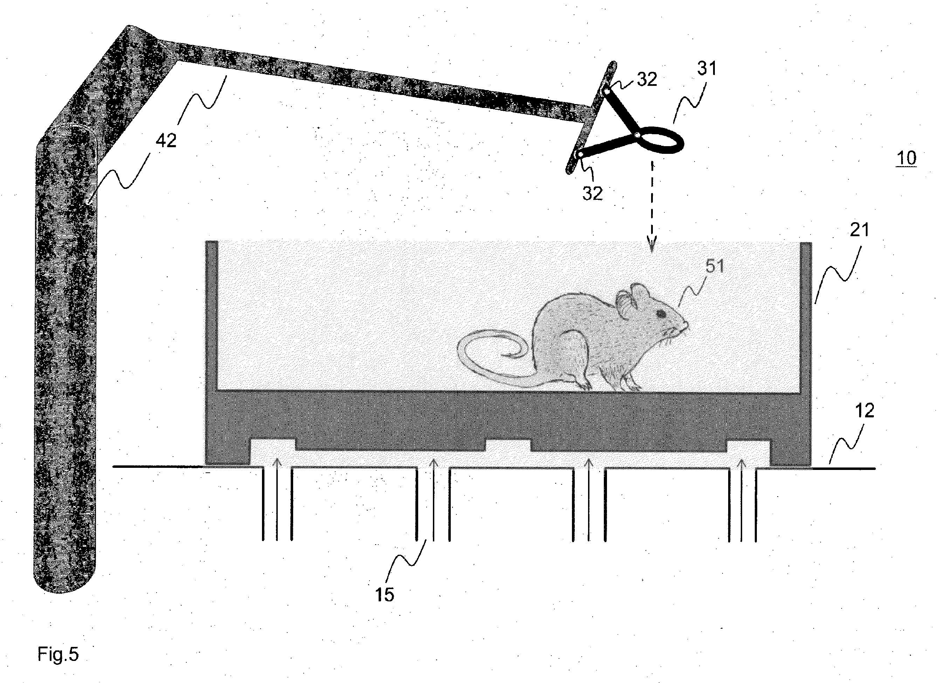

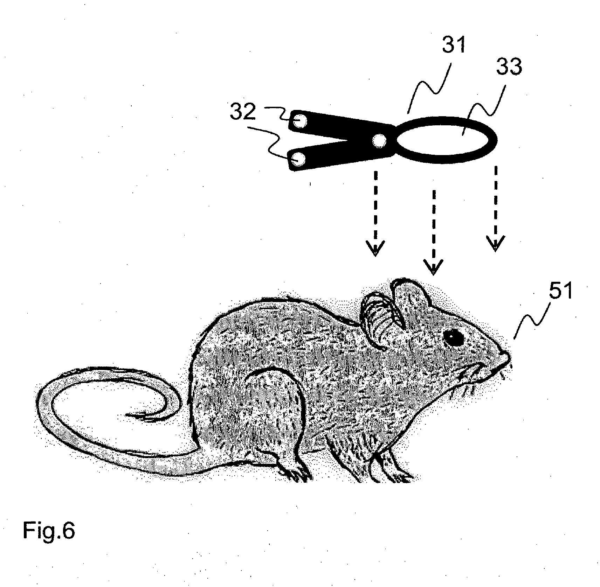

Fig. 5 illustrates a mobile platform arrangement **10** comprising means for securing an experimental animal **51** in accordance with one embodiment. Head adapter **31** is thus provided to be secured onto experimental animal's **51** head (further illustrated by Fig.6). Head adapter comprises a central aperture **33** and connectors **32.** Head adapter and means for securing thereof on an experimental animal comprise a known state-of-art and are not described further in this disclosure. An experimental animal **51** is positioned within the mobile platform **21,** which is, in turn, positioned within the support platform. The support platform shown on Fig. 5 is implemented in accordance with any aforesaid embodiment.

In one embodiment the mounting means for head adapter **31** are realized as a support stand **42** (Fig.5). Support stand **42** may comprise a pivot arm jointly connected to a pillar-like stand. A head adapter **31** is therefore releasably connected to pivot arm by means of connectors, such as screw connectors, for example, that may be fastened through apertures **32.** Support stand **42** of one embodiment may be fixedly or releasably mounted onto the support platform **11** or alternatively fixed at a close proximity thereto.

In some other embodiment the mounting means for head adapter **31** may be realized as one or more suspension rods or cords suspended over the mobile platform arrangement **10** and providing necessary fixation means for the head adapter **31.** Head adapter may be directly or indirectly connected to suspension rods, wherein indirect connection implies utilization of auxiliary connecting means.

Provision of the mounting means for head adapter (e.g. **42)** enables unrestricted movement of an animal **51** with a head adapter **31** fixed on its head within the mobile platform **21** (Fig.5). The head adapter **31** thus ensures static position of animal's head in regards to the support platform **11.** An animal is therefore allowed to move within the borders defined by sidewalls of the mobile platform **21** while its head remains rigidly fixed by the head adapter. Movement of an animal **51** within the mobile platform **21** imposes an acceleration force on the mobile platform and causes the mobile platform to glide on and/or over the sliding surface **12** of the support platform **11** in accordance with previous embodiments.

The operation of the mobile platform arrangement **10** is based on the following. An experimental animal **51** moves within the mobile platform **21** thus applying an external force onto the mobile platform and providing necessary acceleration thereto. This causes the mobile platform to perform smooth gliding movements along the sliding surface **12** of the support platform **11.** The sliding surface **12** is the surface with friction-reduced properties, as described above. Since weight of the mobile platform **21** is preferably adjusted to match the weight of an experimental animal it accommodates, as described elsewhere in this document, an animal, in turn, applies same force to make the mobile platform moving along and/or over the sliding surface of the support platform, as it usually applies for carrying its own weight while moving in natural and/or cage conditions. Walking within the mobile platform **21,** and thus mediating gliding motion of the mobile platform along and/or over the sliding surface **12** of the support platform **11,** presumably evokes in experimental animal a sensation of moving in non-limited two-dimensional space. However, being restricted by sidewalls of the mobile platform **21,** an experimental animal presumably receives an illusion of being in familiar and therefore safe conditions, such as a cage, for example, and therefore does not express prominent negative behavioral responses, such as fear, while being placed under an experimental setup. Absence of prominent negative responses of an experimental animal while conducting neuronal research may be an important factor affecting neuronal reactions while establishing behavioral patterns on cellular level.

The mobile platform arrangement **10** in addition to means for securing an experimental animal may be provided with optional accessories and/or auxiliary devices for testing an experimental animal's responses to external stimuli and/or for providing external stimuli. Stimuli may be selected from, but are not limited to visual, audial and/or tactile stimuli. The abovesaid devices may comprise, but are not limited to, a water source, a feed dispenser, means for providing visual stimuli, such as a two- or three-dimensional screen, for example, means for providing tactile stimuli, such as a light electric shock source, and the like. Technical implementation of above said devices depends on overall experimental setup and on the most appropriate method of being installed and/or mounted onto the mobile platform arrangement **10.**

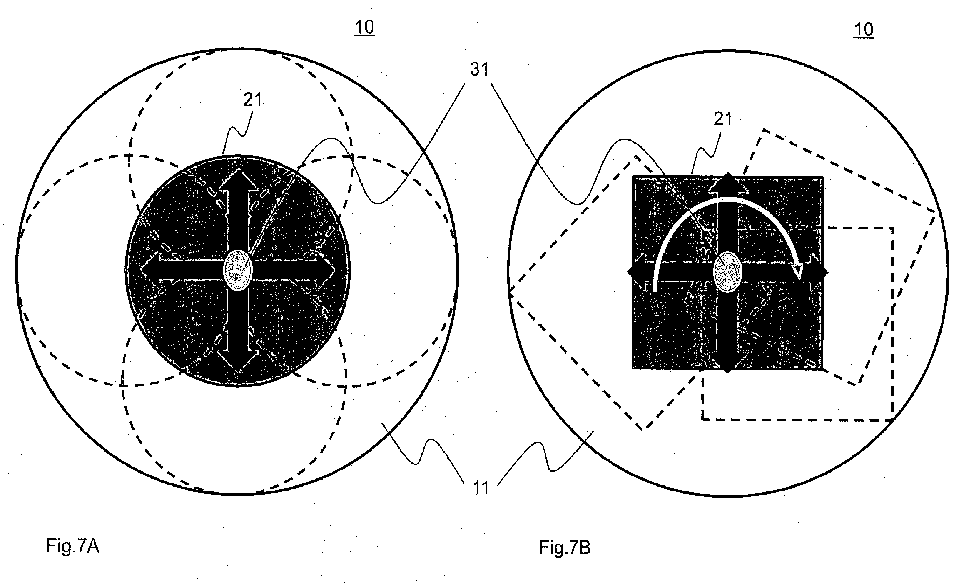

In some embodiments the mobile platform **21** of a substantially rectangular shape is provided. Those skilled in art may understand, however, that geometrical shape of the mobile platform **21** and of the support platform **11** may not be restricted by circle and rectangle. Circular and/or rectangular configurations of the mobile platform suit best for the models of practical implementation and are therefore described in this disclosure. Figs. 7A and 7B illustrate the mobile platform of circular and rectangular shapes, respectively, with an experimental animal (not shown) secured with the head adapter **31** positioned therein, and possible motion patterns of the mobile platform **21** along and/or over the support platform **11.**

The mobile platform arrangement **10** is thus provided as a tool for conducting a complex research combining neuronal- and behavioral studies and involving utilization of modern equipment, such as multi-photon microscopes, and traditional methods of behavioral research by means of providing physiological clues. The equipment is advantageously adjusted to size and weight of a small experimental animal, such as a small rodent. The mobile platform arrangement **10** is thus provided as a tool to conduct a combined neuronal- and behavioral research on moving and wake small experimental animal.

In one aspect of the invention a method to operate the mobile platform arrangement **10,** comprising means for securing a conscious, wake and able to move experimental animal **51,** is provided, said method comprises:
- obtaining the mobile platform arrangement **10** provided with the mounting means **42** for head adapter:
- installing the mobile platform arrangement **10** provided with the mounting means **42** for head adapter into a standard laboratory microscopic setup;
- obtaining an experimental animal **51;**
- fixing the head adapter **31** onto an experimental animal's head;
- placing an experimental animal **51** onto the mobile platform **21** while the mobile platform is positioned onto the sliding surface **12** of the support platform **11;**
- connecting head adapter **31** to mounting means **42;**
- allowing an experimental animal **51** to move within the mobile platform **21;**
- monitoring a gliding movement of the mobile platform **21** accommodating an experimental animal **51** with its head fixed by the head adapter **31** therealong the sliding surface structure 12;
- proceeding with experimental procedures.

In one aspect of the invention, a method for obtaining experimental data on neuronal activity of conscious, wake and able to move experimental animal is provided, wherein said method comprises at least several of the following steps:
- obtaining the mobile platform arrangement **10** provided with the mounting means **42** for head adapter:
- installing the mobile platform arrangement **10** provided with the mounting means **42** for head adapter into a standard laboratory microscopic setup;
- obtaining an experimental animal **51** prepared to have the head adapter fixed onto its head;
- fixing the head adapter **31** onto an experimental animal's head;
- placing an experimental animal **51** onto the mobile platform **21** while the mobile platform **21** is positioned onto the sliding surface **12** of the support platform **11;**
- connecting head adapter **31** to mounting means **42;**
- allowing an experimental animal **51** to move within the mobile platform **21;**
- monitoring a gliding movement of the mobile platform **21** accommodating an experimental animal **51** with its head fixed by the head adapter **31** therealong the sliding surface structure **12;**
- placing an objective of the microscope into a central aperture **33** of the head adapter **31;**
- proceeding with observations and obtaining experimental data;
- inducing behavioral response in an experimental animal **51** by providing an experimental animal **51** with physiological stimuli;
- observing changes in neuronal activity on cellular level and collecting experimental data.

The above description of various embodiments of the mobile platform arrangement is given by way of example, and not limitation. Mobile platform arrangement, in accordance with the embodiments disclosed herein, is intended to provide a representative basis for teaching one skilled in art to employ the present invention in various configurations in regards to its aspects.

Cited non-patent references:
1. Hofer et al. Experience leaves a lasting structural trace in cortical circuits. Nature (2009); 457(7227):313-7.
2. Holtmaat et al. Long-term, high-resolution imaging in the mouse neocortex through a chronic cranial window. Nature Protocols (2009); 4(8):1128-44
3. Flusberg et al. Fiber-optic fluorescence imaging. Nature Methods (2005); 2(12):941-50.
4. Flusberg et al. High-speed, miniaturized fluorescence microscopy in freely moving mice. Nature Methods (2008); 5(11):935-8.
5. Yang et al. Thinned-skull cranial window technique for long-term imaging of the cortex in live mice. Nature Protocols (2010); 5(2):201-8.
6. Larsen & Langmoen. The effect of volatile anaesthetics on synaptic release and uptake of glutamate. Review. Toxicol Lett (1998); 100-101:59-64.
7. Nallasamy & Tsao. Functional connectivity in the brain: effects of anesthesia. Neuroscientist (2011); 17(1):94-106.
8. Chau PL. New insights into the molecular mechanisms of general anaesthetics. Review. Br J Pharmacol (2010); 161(2):288-307. Review.
9. Wienisch et al. Two-photon imaging of neural activity in awake, head-fixed mice. (2012). Neuronal Network Analysis: Neuromethods 67:45-60.
10. Hölscher et al., Rats are able to navigate in virtual reality. J Exp Biol (2005); 208(3): 561-569.
11. Dombeck et al., Imaging large-scale neural activity with cellular resolution in awake, mobile mice. Neuron (2007); 56(1): 43-57.
12. Kendler HH. An investigation of latent learning in a T-maze. J Comp Physiol Psychol. (1947); 40(4):265-270.
13. US Pat. 3,974,798. Method and apparatus for studying laboratory animal behavior (1976).
14. US Pat. 7,086,350. Animal cage behavior system (2006).
15. US Pat. 1,794,951. Exercising device for animals (1931).

## Claims

1. A mobile platform arrangement (10) comprising:
- a first platform (21) with an outer diameter d and
- a second platform (11) with a diameter at least 2d, equal at least two outer diameters d of the first platform;
wherein the first platform (21) and the second platform (11) are flat-bottomed members;
wherein the first platform (21) is a container which comprises sidewalls and a surface area therewithin;
wherein the second platform (11) is provided with boundaries and a surface area therewithin;
wherein the second platform (11) accommodates the first platform (21) at the surface area within its boundaries;
wherein the surface area within the boundaries of the second platform (11) is provided with a surface structure (12);
wherein the first platform (21) is positioned onto the surface structure (12); wherein the surface structure (12) is a sliding surface for supporting an unobstructed gliding motion of the first platform (21) along and/or over the surface structure (12) of the second platform (11) upon providing an external acceleration force to the first platform (21).

2. The mobile platform arrangement of claim 1, wherein the second platform (11) is provided with boundaries defined as sidewalls (11a).

3. The mobile platform arrangement of claim 1, wherein the second platform (11) is provided with boundaries defined as side edges.

4. The mobile platform arrangement of any of the preceding claims, wherein distance (14a) is preserved between the surface structure (12) and the surface area within the boundaries of the second platform (11).

5. The mobile platform arrangement of claim 4, wherein the surface structure (12) comprises apertures (15) disposed at a predefined distance from each other for constant and uniform supply of nonhazardous gas therethrough.

6. The mobile platform arrangement of any of the preceding claims, wherein the first platform (21) comprises at its external surface recesses (23) and a projection (24) along a perimeter thereof.

7. The mobile platform arrangement of claims 1-3, wherein the second platform (11) is provided with the surface structure (12) covered with lubricant.

8. The mobile platform arrangement of claims 1-3, wherein the first platform (21) incorporates an array of individual magnets (17a) arranged within the bottom thereof and the second platform (11) incorporates an array of individual magnets (17) arranged within the top surface area thereof; wherein disposition of individual magnets (17a) within magnetic array of the first platform (21) in regard to individual magnets (17) within magnetic array of the second platform (11) is such to enable magnetic repulsion between arrays.

9. The mobile platform arrangement of claims 1-3, wherein the surface structure (12) is formed by a bearing array or bearing arrays comprising individual bearing elements (18).

10. The mobile platform arrangement of claims 1-3, wherein the second platform (11) is adapted to contain liquid and the first platform (21) comprises a stabilizing element (19) adapted to provide buoyancy to at least the first platform (21) and keep the first platform (21) afloat on a liquid surface.

11. The mobile platform arrangement of claim 10, wherein the stabilizing element (19) is implemented in the form of a doughnut-shaped cushion.

12. The mobile platform arrangement of any of the preceding claims comprising means for securing conscious and wake experimental animal (51), said means comprising a head adapter (31) for fixation on an experimental animal's head and mounting means (42) for head adapter, said mounting means are connected to the head adapter (31) and advantageously disposed at the side of the second platform (11) or at a close proximity thereto.

13. The mobile platform arrangement of claim 12 wherein the head adapter (31) provides a rigid fixation of experimental animal's head and ensures static position of experimental animal's head in regard to the second platform (11).

14. The mobile platform arrangement of claims 12 and 13, wherein the mounting means (42) is configured to provide an experimental animal (51) with a head adapter fixed on its head with motional freedom within the first platform (21).

15. The mobile platform arrangement of any preceding claim for integration into a standard laboratory microscopic setup and the like.

16. A method to operate the mobile platform arrangement (10) as claimed in claim 1 and provided with means for securing a conscious, awake and able to move experimental animal (51), said method comprises at least the following steps:
- obtaining the mobile platform arrangement (10) provided with the mounting means (42) for head adapter;
- installing the mobile platform arrangement (10) provided with the mounting means (42) for head adapter into a standard laboratory microscopic setup;
- obtaining an experimental animal (51);
- fixing the head adapter (31) onto an experimental animal's head;
- placing an experimental animal (51) onto the first platform (21) while the first platform is positioned onto the sliding surface (12) of the second platform (11);
- connecting head adapter (31) to mounting means (42);
- allowing an experimental animal (51) to move within the first platform (21);
- monitoring a gliding movement of the first platform (21) accommodating an experimental animal (51) with its head fixed by the head adapter (31) therealong the sliding surface structure (12);
- proceeding with experimental procedures.

## Patentansprüche

1. Mobile Plattform-Anordnung (10), aufweisend:
- eine erste Plattform (21) mit einem Außendurchmesser d und
- eine zweite Plattform (11) mit einem Durchmesser von mindestens 2d, entsprechend mindestens zwei Außendurchmessern d der ersten Plattform;
wobei die erste Plattform (21) und die zweite Plattform (11) Elemente mit einem flachen Boden sind;
wobei die erste Plattform (21) ein Behälter ist, der Seitenwände und einen dazwischen liegenden Flächenbereich aufweist;
wobei die zweite Plattform (11) mit Grenzen und einem dazwischen liegenden Flächenbereich versehen ist;
wobei die zweite Plattform (11) an dem Flächenbereich innerhalb dessen Grenzen die erste Plattform (21) aufnimmt;
wobei der Flächenbereich innerhalb der Grenzen der zweiten Plattform (11) mit einer Oberflächenstruktur (12) versehen ist;
wobei die erste Plattform (21) auf der Flächenstruktur (12) positioniert ist;
wobei die Oberflächenstruktur (12) eine Gleitfläche zum Unterstützen einer ungehinderten Gleitbewegung der ersten Plattform (21) entlang und/oder über die Oberflächenstruktur (12) der zweiten Plattform (11) nach Vorsehen einer externen Beschleunigungskraft der ersten Plattform (21) ist.

2. Mobile Plattform-Anordnung nach Anspruch 1, wobei die zweite Plattform (11) mit Grenzen versehen ist, die als Seitenwände (11a) definiert sind.

3. Mobile Plattform-Anordnung nach Anspruch 1, wobei die zweite Plattform (11) mit Grenzen versehen ist, die als Seitenränder definiert sind.

4. Mobile Plattform-Anordnung nach einem der vorangehenden Ansprüche, wobei ein Abstand (14a) zwischen der Oberflächenstruktur (12) und dem Flächenbereich innerhalb der Grenzen der zweiten Plattform (11) erhalten bleibt.

5. Mobile Plattform-Anordnung nach Anspruch 4, wobei die Oberflächenstruktur (12) Öffnungen (15) aufweist, die an einem vorbestimmten Abstand zueinander für eine konstante und einheitliche Zufuhr von ungefährlichem Gas hier hindurch angeordnet sind.

6. Mobile Plattform-Anordnung nach einem der vorangehenden Ansprüche, wobei die erste Plattform (21) an ihrer externen Fläche Vertiefungen (23) und einen Vorsprung (24) entlang deren Umfang aufweist.

7. Mobile Plattform-Anordnung nach Ansprüchen 1 - 3, wobei die zweite Plattform (11) mit der Flächenstruktur (12) versehen ist, die mit einem Gleitmittel bedeckt ist.

8. Mobile Plattform-Anordnung nach Ansprüchen 1 - 3, wobei die erste Plattform (21) ein Array von individuellen Magneten (17a) umfasst, die innerhalb deren Bodens angeordnet sind, und die zweite Plattform (11) ein Array von einzelnen Magneten (17) aufweist, die innerhalb deren oberen Flächenbereiches angeordnet sind; wobei eine Anordnung der einzelnen Magnete (17a) innerhalb des Magnet-Arrays der ersten Plattform (21) im Hinblick auf die einzelnen Magnete (17) innerhalb des Magnet-Arrays der zweiten Plattform (11) derart vorliegt, um eine magnetische Abstoßung zwischen den Arrays zu ermöglichen.

9. Mobile Plattform-Anordnung nach Ansprüchen 1 - 3, wobei die Oberflächenstruktur (12) durch ein Auflager-Array oder Auflager-Arrays gebildet ist, die einzelne Lagerelemente (18) aufweist/aufweisen.

10. Mobile Plattform-Anordnung nach Ansprüchen 1 - 3, wobei die zweite Plattform (11) dazu adaptiert ist, eine Flüssigkeit zu beinhalten, und die erste Plattform (21) ein Stabilisierelement (19) aufweist, das dazu adaptiert ist, einen Auftrieb bezüglich zumindest der ersten Plattform (21) zu schaffen und die erste Plattform (21) auf einer Flüssigkeits-Oberfläche aufschwimmend zu halten.

11. Mobile Plattform-Anordnung nach Anspruch 10, wobei das Stabilisierelement (19) in der Form eines doughnut-förmigen Kissens implementiert ist.

12. Mobile Plattform-Anordnung nach einem der vorangehenden Ansprüche, aufweisend Mittel zum Sichern eines bei Bewusstsein munteres Testtieres (51), wobei die Mittel einen Kopfadapter (31) zur Fixation eines Kopfes eines Testtieres und Befestigungsmittel (42) für den Kopfadapter aufweisen, wobei die Montiermittel an dem Kopfadapter (31) angeschlossen und vorteilhaft an der Seite der zweiten Plattform (11) oder in unmittelbarer Nähe hierzu angeordnet sind.

13. Mobile Plattform-Anordnung nach Anspruch 12, wobei der Kopfadapter (31) eine steiffeste Fixierung des Kopfes des Testtieres schafft und eine statische Position des Kopfes des Testtieres hinsichtlich der zweiten Plattform (11) gewährleistet.

14. Mobile Plattform-Anordnung nach Ansprüchen 12 und 13, wobei die Montiermittel (42) konfiguriert sind, um ein Testtier (51) mit einem auf seinem Kopf fixierten Kopfadapter in Bewegungsfreiheit innerhalb der ersten Plattform (21) zu belassen.

15. Mobile Plattform-Anordnung nach einem der vorangehenden Ansprüche zur Integration in einen Standard-Labormikroskop-Aufbau und dergleichen.

16. Verfahren zum Betreiben der mobilen Plattform-Anordnung (10), wie sie in Anspruch 1 beansprucht ist und mit Mitteln zum Sichern eines bei Bewusstsein munteren sowie bewegungsfähigen Testtieres (51) versehen ist, wobei das Verfahren zumindest folgende Schritte aufweist:
- Erhalten der mobilen Plattform-Anordnung (10), die mit den Montiermitteln (42) für einen Kopfadapter versehen ist;
- Installieren der mobilen Plattform-Anordnung (10), die mit den Montiermitteln (42) versehen ist für einen Kopfadapter in einen Standard-Labormikroskop-Aufbau;
- Erhalten eines Testtieres (51);
- Fixieren des Kopfadapters (31) auf dem Kopf eines Testtieres;
- Platzieren eines Testtieres (51) auf der ersten Plattform (21), während die erste Plattform auf der Gleitfläche (12) der zweiten Plattform (11) positioniert ist;
- Anschließen des Kopfadapters (31) an die Montiermittel (42);
- Gestatten einer Bewegung des Testtieres (51) innerhalb der ersten Plattform (21);
- Überwachen einer Gleitbewegung der ersten Plattform (21), die ein Testtier (51) aufnimmt, mit dessen Kopf fixiert durch den Kopfadapter (31) über den Gleitflächen-Aufbau (12);
- Verarbeiten der Experimental-Verfahren.

## Revendications

1. Agencement mobile de plateformes (10), comprenant :
- une première plateforme (21) avec un diamètre extérieur d, et
- une seconde plateforme (11) avec un diamètre d'au moins 2d, égal à au moins deux diamètres extérieurs d de la première plateforme ;
dans lequel la première plateforme (21) et la seconde plateforme (11) sont des éléments à fonds plats ;
dans lequel la première plateforme (21) est un contenant qui comprend des parois latérales et une superficie à l'intérieur de celui-ci ;
dans lequel la seconde plateforme (11) est pourvue de limites et d'une superficie à l'intérieur de celle-ci ;
dans lequel la seconde plateforme (11) loge la première plateforme (21) à la superficie à l'intérieur de ses limites ;
dans lequel la superficie à l'intérieur des limites de la seconde plateforme (11) est pourvue d'une structure de surface (12) ;
dans lequel la première plateforme (21) est positionnée sur la structure de surface (12) ;
dans lequel la structure de surface (12) est une surface de coulissement pour supporter un mouvement de glissement non obstrué de la première plateforme (21) le long de et/ou par-dessus la structure de surface (12) de la seconde plateforme (11) lors de la fourniture d'une force d'accélération externe à la première plateforme (21).

2. Agencement mobile de plateformes selon la revendication 1, dans lequel la seconde plateforme (11) est pourvue de limites définies sous forme de parois latérales (11a).

3. Agencement mobile de plateformes selon la revendication 1, dans lequel la seconde plateforme (11) est pourvue de limites définies sous forme de bords latéraux.

4. Agencement mobile de plateformes selon une quelconque des revendications précédentes, dans lequel une distance (14a) est préservée entre la structure de surface (12) et la superficie à l'intérieur des limites de la seconde plateforme (11).

5. Agencement mobile de plateformes selon la revendication 4, dans lequel la structure de surface (12) comprend des ouvertures (15) disposées à une distance prédéfinies les unes des autres pour l'alimentation constante et uniforme en gaz sans danger à travers celles-ci.

6. Agencement mobile de plateformes selon une quelconque des revendications précédentes, dans lequel la première plateforme (21) comprend, à sa surface externe, des évidements (23) et une saillie (24) le long d'un périmètre de celle-ci.

7. Agencement mobile de plateformes selon les revendications 1 à 3, dans lequel la seconde plateforme (11) est pourvue de la structure de surface (12) couverte avec un lubrifiant.

8. Agencement mobile de plateformes selon les revendications 1 à 3, dans lequel la première plateforme (21) incorpore un réseau d'aimants individuels (17a) agencés à l'intérieur du fond de celle-ci et la seconde plateforme (11) incorpore un réseau d'aimants individuels (17) agencés à l'intérieur de la superficie supérieure de celle-ci ; dans lequel la disposition d'aimants individuels (17a) à l'intérieur du réseau magnétique de la première plateforme (21) par rapport aux aimants individuels (17) à l'intérieur du réseau magnétique de la seconde plateforme (11) est telle à permettre la répulsion magnétique entre les réseaux.

9. Agencement mobile de plateformes selon les revendications 1 à 3, dans lequel la structure de surface (12) est formée par un réseau de paliers ou des réseaux de paliers comprenant des éléments paliers individuels (18).

10. Agencement mobile de plateformes selon les revendications 1 à 3, dans lequel la seconde plateforme (11) est adaptée pour contenir un liquide et la première plateforme (21) comprend un élément stabilisateur (19) adapté pour fournir une flottabilité à au moins la première plateforme (21) et maintenir la première plateforme (21) en flottaison sur une surface liquide.

11. Agencement mobile de plateformes selon la revendication 10, dans lequel l'élément stabilisateur (19) est réalisé sous forme de coussin de forme annulaire.

12. Agencement mobile de plateformes selon une quelconque des revendications précédentes comprenant des moyens pour attacher un animal de laboratoire conscient et éveillé (51), lesdits moyens comprenant un adaptateur pour tête (31), pour la fixation sur la tête d'un animal de laboratoire, et des moyens de montage (42) pour l'adaptateur pour tête, lesdits moyens de montage sont raccordés à l'adaptateur pour tête (31) et avantageusement disposés sur le côté de la seconde plateforme (11) ou à proximité de celle-ci.

13. Agencement mobile de plateformes selon la revendication 12 dans lequel l'adaptateur pour tête (31) fournit une fixation rigide de la tête de l'animal de laboratoire et garantit la position statique de la tête de l'animal de laboratoire par rapport à la seconde plateforme (11).

14. Agencement mobile de plateformes selon les revendications 12 et 13, dans lequel les moyens de montage (42) sont configurés pour doter un animal de laboratoire (51) d'un adaptateur pour tête fixé sur sa tête avec liberté de mouvement à l'intérieur de la première plateforme (21).

15. Agencement mobile de plateformes selon une quelconque revendication précédente, pour intégration dans une préparation microscopique de laboratoire standard et analogue.

16. Procédé pour faire fonctionner l'agencement mobile de plateformes (10) selon la revendication 1 et pourvu de moyens pour attacher un animal de laboratoire conscient, éveillé et capable de se déplacer (51), ledit procédé comprend au moins les étapes suivantes :
- l'obtention de l'agencement mobile de plateformes (10) pourvu des moyens de montage (42) pour l'adaptateur pour tête ;
- l'installation de l'agencement mobile de plateformes (10), pourvu des moyens de montage (42) pour l'adaptateur pour tête, dans une préparation microscopique de laboratoire standard ;
- l'obtention d'un animal de laboratoire (51) ;
- la fixation de l'adaptateur pour tête (31) sur la tête d'un animal de laboratoire ;
- le positionnement d'un animal de laboratoire (51) sur la première plateforme (21) alors que la première plateforme est positionnée sur la surface de coulissement (12) de la seconde plateforme (11) ;
- le raccordement de l'adaptateur pour tête (31) aux moyens de montage (42) ;
- le mouvement libre, d'un animal de laboratoire (51), à l'intérieur de la première plateforme (21) ;
- la surveillance d'un mouvement de glissement de la première plateforme (21) logeant un animal de laboratoire (51) avec sa tête fixée par l'adaptateur pour tête (31) le long de la structure de surface de coulissement (12) ;
- la continuation de procédures d'expérience.
